# EUROPEAN PATENT APPLICATION

(11) **EP 3 812 435 A1**
(43) Date of publication of application: **28.04.2021**
(21) Application number: 19204473.3
(22) Date of filing: 22.10.2019
(51) Int. Cl.: C09J 5/06, C08J 5/12

(54) **PROCESS FOR THE MANUFACTURE OF EPDM-SILICONE HYBRID PRODUCTS**

(71) Applicant: Trelleborg Sealing Profiles Sweden AB, 331 29 Värnamo (SE)
(72) Inventor: BJÖRKQVIST, Markku, 331 42 VÄRNAMO (SE)
(74) Representative: Flügel Preissner Schober Seidel

(57) **Abstract**

The invention relates to a process for the manufacture of hybrid products comprising two different elastomer materials bonded to each other, said different elastomer materials being based on a rubber of the ethylene propylene diene monomer (EPDM) type and a rubber of the silicone type wherein the silicone rubber comprises alkenyl functionalized polydialkylsiloxanes . The inventive process is particularly useful for the manufacture of EPDM-silicone hybrid sealing profiles.

## Description

### Field of the invention

The invention relates to a process for the manufacture of hybrid products comprising two different elastomer materials bonded to each other, said different elastomer materials being based on a rubber of the ethylene propylene diene monomer (EPDM) type and a rubber of the silicone type. The inventive process is particularly useful for the manufacture of EPDM-silicone hybrid sealing profiles.

### Background of the invention

Ethylene-propylene-diene (EPDM) and silicone polymer materials have advantages and disadvantages.

EPDM has good weather resistance (ozone, UV, temperature) and physical/mechanical properties (tearing resistance, compression set, elongation), and its processability allows complicated shapes. Also, it has a good price-performance ratio. Its disadvantages are that the range of possible colors is limited. While black is easy to produce, other colors are difficult to produce. The carbon black used to produce black EPDM is responsible for some of the good physical properties, but replacing carbon black in colored compounds reduces the physical properties of EPDM. Due to the high viscosity of the EPDM compounds wall thicknesses below 0,8 mm are difficult to extrude. Also, the price of colored EPDM materials is much higher than for black EPDM.

Silicone has excellent weather resistance (ozone, UV, temperature) and physical/mechanical properties. The compression set is even better than for EPDM, and the mechanical properties do not change over a wide temperature range. Also, there are no limitations in colors, even transparent is possible, and silicone has good compatibility to structural glazing facade application. The disadvantages of silicone are the relatively low tearing resistance, the bad compound availability, and the high price.

It has long been attempted to make composite materials that combine in the same product the qualities inherent in each of the rubbers of the silicone type and the ethylene-propylene copolymer or terpolymer type. US patent 5,346,760 describes a two-layer composite material based on such rubbers. The layers, however, have a complex composition. The first layer comprises a silicone rubber and an ethylene-propylene copolymer and/or terpolymer rubber. The second layer comprises an ethylene-propylene copolymer and/or terpolymer and a different rubber such as nitrile rubber, styrenebutadiene rubber or natural rubber. Also, both layers need to contain a specified amount of silica with a specified pore volume and average particle size.

### Object of the invention

It is an object of the invention to provide a process for bonding EPDM rubber material to silicone rubber material to thus allow the manufacture of EPDM-silicone hybrid products that combine the advantages of both EPDM and silicone materials and eliminate the disadvantages of the single materials.

### Solution according to the invention

Any references to singular characteristics or limitations of this specification shall include the corresponding plural characteristic or limitation, and *vice versa* unless otherwise specified or clearly implied to the contrary by the context in which the reference is made. All references to one (including the articles "a" and "the"), two or another number of objects are, provided nothing else is expressly mentioned, meant to be understood as not excluding the presence of further such objects in the invention.

All the embodiments of the invention described herein are contemplated from and may be read from both an open-ended and inclusive view (i.e., using "comprising" language) and a closed and exclusive view (i.e., using "consisting of" language). The term "comprising" thus encompasses and includes the more restrictive terms "consisting essentially of" and "consisting of".

As used herein parentheses are used to designate that something is optionally present, to qualify or further define a previously mentioned term, or to list narrower embodiments.

Except where otherwise indicated, all numerical quantities in the following detailed description (e.g., amounts, ranges, ratios, reaction conditions, or the number of atoms in a chemical formula) are to be understood as modified by the word "about".

The term "about" can indicate a variation of 10 % of the value specified, e.g., about 50 % carries a variation from 45 to 55 %. For integer ranges, the term "about" can include one or two integers greater than and less than a recited integer.

Unless otherwise indicated, all percent values regarding amounts, ranges, and ratios are based on the weight.

It is to be understood that upper and lower amounts, ranges, and ratios set forth herein may be independently combined. Similarly, the amounts, ranges, and ratios for each element of the invention can be used together with amounts, ranges, and ratios for any of the other elements.

Unless otherwise indicated, each chemical or composition referred to herein should be interpreted as being a commercial grade material which may contain the isomers, byproducts, derivatives, and other such materials which are normally understood to be present in the commercial grade.

Any reference numerals in the patent claims are not meant to be limiting but merely serve to improve the readability of the claims.

According to the invention, the above problem is solved by a process for the manufacture of hybrid products comprising two different elastomer materials bonded to each other, said different elastomer materials being based on a rubber of the ethylene-propylene-diene (EPDM) type and a rubber of the silicone type;
wherein an EPDM rubber material and a silicone rubber material are covulcanized in contact with each other in the presence of a peroxide curing agent; and
wherein the silicone rubber comprises alkenyl functionalized polydialkylsiloxanes of the general formula:

   R₃Si-[O-SiR₂]ₙ-O-SiR₃;

   wherein R is selected from the group consisting of C₁-C₈alkyl and C₁-C₈alkenyl groups, and n is a natural number specifying the number of repeating units.

The inventive process surprisingly allows the manufacture of EPDM-silicone hybrid products. The EPDM-silicone hybrid products obtained have excellent weather resistance (ozone, UV, temperature) and physical/mechanical properties (in particular tearing resistance, compression set, elongation) which do not change over a wide temperature range. There are no limitations in colors, even transparent is possible. The processability of the material allows complicated shapes (e.g., profiles), and the material has good compatibility to structural glazing facade application. Also, the price-performance ratio is very good.

The inventive process is particularly useful for the manufacture of EPDM-silicone hybrid sealing profiles. An advantage is that in comparison to full silicone profiles the manufacturing costs are significantly reduced.

### Preferred embodiments of the invention

The silicone rubber used in the inventive process comprises alkenyl functionalized polydialkylsiloxanes of the general formula:

R₃Si-[O-SiR₂]ₙ-O-SiR₃;

wherein R is selected from the group consisting of C₁-C₈alkyl and C₁-C₈alkenyl groups, and n is a natural number specifying the number of repeating units.

Suitable C₁-C₈ alkyl groups may have straight or branched chains and may be unsubstituted as well as substituted. In one embodiment of the inventive process, the used alkenyl functionalized polydialkylsiloxane comprises C₁-C₆ or C₁-C₄ alkyl groups.

Specific examples for alkyl groups are methyl, ethyl, n-propyl, iso-propyl, n-butyl, iso-butyl, tert.-butyl, n-pentyl, iso-pentyl, n-hexyl, iso-hexyl, n-heptyl, iso-heptyl, n-octyl or iso-octyl groups. The skilled artisan appreciates that for higher alkyl groups the term "iso" comprises more than one possible isomer. All possible isomers of the above alkyl groups are suitable in the inventive process.

Suitable C₁-C₈ alkenyl groups may have straight or branched chains and may be unsubstituted as well as substituted. Higher alkenyl groups may contain more than one double bond which may be conjugated or not. In one embodiment of the inventive process. the used alkenyl functionalized polydialkylsiloxane comprises C₁-C₆ or C₁-C₄ alkenyl groups.

Specific examples for alkenyl groups are ethenyl (vinyl), n-propenyl, iso-propenyl, n-butenyl, iso-butenyl, tert.-butenyl, n-pentenyl, iso-pentenyl, n-hexenyl, iso-hexenyl, n-heptenyl, iso-heptenyl, n-octenyl or iso-octenyl groups. The skilled artisan appreciates that for higher alkenyl groups the term "iso" comprises more than one possible isomer. All possible isomers of the above alkenyl groups are suitable in the inventive process.

The degree of alkenyl functionalization (the content of alkenyl groups) of the polydialkylsiloxanes used in the inventive process is not subject to any special restrictions or limitations and may be selected by the skilled person according to practical circumstances or as desired. The content of alkenyl groups may be, for example, 0.01 to 10 mol%, expecially 0.1 to 1 mol% of the entire R groups.

The natural number n specifying the number of repeating units in the used alkylene functionalized polydialkylsiloxane is not subject to any special restrictions or limitations and may be selected by the skilled person according to practical circumstances or as desired. For example, n may be selected so that the used alkylene functionalized polydialkylsiloxane has a suitable viscosity for extrusion.

In one embodiment of the invention, the used alkenyl functionalized polydialkylsiloxan is a vinyl functionalized polydimethylsiloxane. A suitable vinyl functionalized polydimethylsiloxane is commercially available under the trade name ELASTOSIL® R 401/70 S from Wacker Chemie AG, Munich, Germany.

The EPDM rubbers used in the inventive process are not subject to any special restrictions or limitations and may be selected by the skilled person according to practical circumstances or as desired. The diene component of the EPDM rubber may be a conjugated or non-conjugated diene. Exemplary of dienes employed in the EPDM are 5-methylene-2-norbornene, 5-ethylidene-2-norbornene, cyclooctadiene, 2-methyl-1,4-pentadiene, 1,4-hexadiene, 4-methyl-1,4-hexadiene, 1,4-heptadiene, 4-methyl-1,4-heptadiene, 4-ethyl-1,4-heptadiene, 1,5-heptadiene, 1,5-octadiene, 5-methyl-1,5-heptadiene, 2-methyl-1,5-hexadiene, 1,6-octadiene, 6-methyl-1,6-octadiene, 2-methyl-1,6-heptadiene, 1,9-decadiene, 1,13-tetradecadiene, vinylcyclohexene, vinylnor-bornene, dicyclopentadiene, 1,3,7-octatriene, and 1,5,9-decatriene. These diene compounds may be used alone or in admixture of two or more.

The peroxide curing agent used in the inventive process is not subject to any special restrictions or limitations and may be selected by the skilled person according to practical circumstances or as desired. Examples for suitable peroxides are acetyl peroxide, benzoyl peroxide, lauroyl peroxide, bis-(2,4-dichlorobenzoyl)peroxide, dicumyl peroxide, tert-butyl peroxyperbenzoate, tert-butyl peroxypivalate, di-tert-butyl peroxide, 2,5-bis-(tert-butylperoxy)-2,5-dimethylhexane, and bis(tert-butyl peroxy isopropyl)benzene. The peroxide curing agent may be used, for example, in an amount of about 1 to 50 parts by weight per 100 parts by weight of the materials to be polymerized by free radicals. It should be noted that curing could also be performed by radiation if desired.

In one embodiment of the inventive process, when the used alkenyl functionalized polydialkylsiloxan is a vinyl functionalized polydimethylsiloxane (e.g., ELASTOSIL® R 401/70 S from Wacker Chemie AG, Munich, Germany), the used curing agent may suitably be bis-(2,4-dichlorobenzoyl)peroxide, dicumyl peroxide, or 2,5-bis-(tert-butylperoxy)-2,5-dimethyl-hexane.

In the invention, the EPDM-silicone hybrid product may be manufactured, for example, directly by coextrusion of a curable composition comprising a suitable EPDM compound and a curable composition comprising a suitable alkenyl functionalized polydialkylsiloxane compound on a twin-screw extruder, followed by covulcanization. The extrusion may be performed, for example, at a temperature in the range of from 100 to 200 °C, preferably in the range of from 40 to 70 °C, and, for example, for a period of from 3 minutes to 3 hours. Optionally, a pressure ranging, for example, from 2 to 20 MPa may be applied during extrusion. The covulcanization is performed in the vulcanization zone of the extruder line (e.g., using a salt bath, hot air, ultra-high frequency (UHF) or infrared radiation) and may be performed, for example, at a temperature in the range of from 180 to 270 °C. The covulcanization may be conducted, for example, for a period of from 3 minutes to 3 hours. Optionally, a pressure ranging, for example, from 2 to 20 MPa may be applied during covulcanization.

In one embodiment of the inventive process, since EPDMs cures fast and silicones cure slowly, the curing speed of the EPDM compound and the silicone compound are advantageously adapted to each other. Methods for the adaptation of different curing speeds are known in the art and may involve, for example, the use of different curing agents or different curing agent concentrations.

In another embodiment of the inventive process, the flow speed of the EPDM compound and the silicone compound in the extruder are advantageously adapted to each other so that the compounds have a similar flow speed in the contact areas. Methods for the adaptation of flow speeds in an extruder are known in the art.

In yet another embodiment of the invention, the curing speeds and the flow speeds of the EPDM compound and the silicone compound are advantageously adapted to each other.

The skilled person appreciates that the used curable composition comprising a suitable EPDM compound and/or the curable composition comprising a suitable alkenyl functionalized polydialkylsiloxane compound may optionally contain various known additives such as reinforcing or extending fillers, plasticizers, lubricating agents, blowing agents, antioxidants, anti-UV additives, colorants, and pigments. Specific examples for additives are ground quartz, calcinated clays, calcium carbonate, zinc oxide, iron oxide, titanium oxide, cobalt oxide, magnesium oxide, aluminium oxide, carbon black, magnesium and aluminium silicates, aluminium, calcium and barium sulfates, asbestos, glass and carbon fibers, synthetic fibers such as aramid, polyester, polyamide and rayon. Various known mixing methods are possible for incorporating the above additives into the curable compositions, the order of introduction of the various constituents not being critical.

### Brief description of the drawings

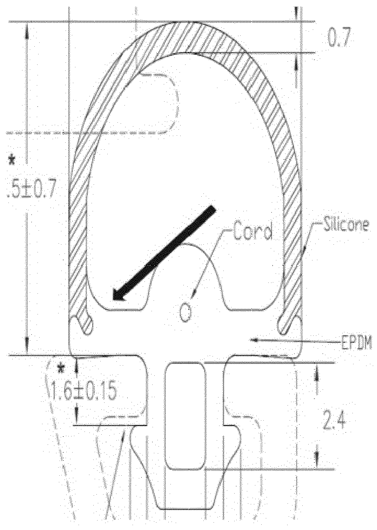

Figure 1 is a sectional view of an EPDM-silicone hybrid sealing profile manufactured using the inventive process.

While certain representative embodiments and details have been shown for the purpose of illustrating the present invention, it will be apparent to those skilled in the art that various changes and modifications can be made therein without departing from the scope of the present invention.

## Claims

1. A process for the manufacture of hybrid products comprising two different elastomer materials bonded to each other, said different elastomer materials being based on a rubber of the ethylene propylene diene monomer (EPDM) type and a rubber of the silicone type;
wherein an EPDM rubber material and a silicone rubber material are covulcanized in contact with each other in the presence of a peroxide curing agent; and
wherein the silicone rubber comprises alkenyl functionalized polydialkylsiloxanes of the general formula:
R₃Si-[O-SiR₂]ₙ-O-SiR₃;
wherein R is selected from the group consisting of C₁-C₈alkyl and C₁-C₈alkenyl groups, and n is a natural number specifying the number of repeating units.

2. The process of claim 1, wherein the C₁-C₈ alkyl groups are selected from the group consisting of methyl, ethyl, n-propyl, iso-propyl, n-butyl, iso-butyl, tert.-butyl, n-pentyl, iso-pentyl, n-hexyl, iso-hexyl, n-heptyl, iso-heptyl, n-octyl and iso-octyl groups, and the C₁-C₈alkenyl groups are selected from the group consisting of ethenyl (vinyl), n-propenyl, iso-propenyl, n-butenyl, iso-butenyl, tert.-butenyl, n-pentenyl, iso-pentenyl, n-hexenyl, iso-hexenyl, n-heptenyl, iso-heptenyl, n-octenyl and iso-octenyl groups.

3. The process of claim 1 or 2, wherein the diene component of the EPDM rubber is a conjugated or non-conjugated diene.

4. The process of claim 3, wherein the diene component is selected from the group consisting of 5-methylene-2-norbornene, 5-ethylidene-2-norbornene, cyclooctadiene, 2-methyl-1,4-pentadiene, 1,4-hexadiene, 4-methyl-1,4-hexadiene, 1,4-heptadiene, 4-methyl-1,4-heptadiene, 4-ethyl-1,4-heptadiene, 1,5-heptadiene, 1,5-octadiene, 5-methyl-1,5-heptadiene, 2-methyl-1,5-hexadiene, 1,6-octadiene, 6-methyl-1,6-octadiene, 2-methyl-1,6-heptadiene, 1,9-decadiene, 1,13-tetradecadiene, vinylcyclohexene, vinylnorbornene, dicyclopentadiene, 1,3,7-octatriene, and 1,5,9-decatriene.

5. The process of any one of the preceding claims, wherein the peroxide curing agent is selected from the group consisting of acetyl peroxide, benzoyl peroxide, lauroyl peroxide, bis-(2,4-dichlorobenzoyl)peroxide, dicumyl peroxide, tert-butyl peroxyperbenzoate, tert-butyl peroxypivalate, di-tert-butyl peroxide, 2,5-bis-(tert-butylperoxy)-2,5-dimethylhexane, and bis(tert-butyl peroxy isopropyl)benzene.

6. The process of any one of the preceding claims, wherein the hybrid product is manufactured directly by coextrusion of a curable composition comprising a suitable EPDM compound and a curable composition comprising a suitable alkenyl functionalized polydialkylsiloxane compound on a twin-screw extruder, followed by covulcanization.

7. The process of any one of the preceding claims, wherein the covulcanization is performed at a temperature in the range of 180 to 270 °C.

8. The process of any one of the preceding claims, wherein the covulcanization is performed for a period of from 3 minutes to 3 hours.

9. The process of any one of the preceding claims, wherein the covulcanization is performed at a pressure ranging from 2 to 20 MPa.

10. EPDM-silicone hybrid sealing profile obtainable by the process according to any of claims 1 to 9.

11. Use of the process of any one of the preceding claims for the manufacture of EPDM-silicone hybrid sealing profiles.
